# EUROPÄISCHE PATENTSCHRIFT

(11) **EP 0 332 866 B1**
(45) Veröffentlichungstag und Bekanntmachung des Hinweises auf die Patenterteilung: **16.03.1994**
(21) Anmeldenummer: 89102640.3
(22) Anmeldetag: 16.02.1989
(51) Int. Cl.: H01R 43/16, H01R 31/02

(54) **Verfahren zur Herstellung einer Mehrfachsteckdose**
Process for manufacturing a multiple socket
Procédé de fabrication d'une prise multiple

(30) Priorität: 14.03.1988 CH 955/88
(43) Veröffentlichungstag der Anmeldung: 20.09.1989
(73) Patentinhaber: FELLER AG., CH-8810 Horgen (CH)
(72) Erfinder: Lüthy, Paul, CH-8800 Thalwil (CH); Oechsle, Willy, CH-8810 Horgen (CH)
(74) Vertreter: Scheidegger, Werner & Co.

(56) Entgegenhaltungen:
- DE-A- 1 540 310
- DE-A- 3 611 224
- DE-U- 7 915 670
- US-A- 4 583 799

## Beschreibung

Die Erfindung betrifft ein Verfahren zur Herstellung einer Mehrfach-Steckdose mit Stromverteilern für Phase, Null und Erde zum Anschliessen an je einen Phase-, Null- und Erd-Leiter, bei welchem aus einer ebenen Platine durch Stanzen drei Stromverteiler (1,2,3) mit gegenseitigen Abständen voneinander in der Ebene hergestellt werden und dass bei unveränderten Abständen in der Ebene die Stromverteiler (1,2,3) mit Ausnahme aller Anschlussenden (5-10) in einem Spritzwerkzeug mit Kunststoffmaterial umspritzt werden.

Bei einer Mehrfach-Steckdose muss von jedem der an diese anzuschliessenden Leiter der Strom zu einer Mehrzahl von Kontaktbuchsen geführt werden, in welche die Steckerstifte der an die Steckdose anzuschliessenden Stecker hineingesteckt werden. Für die in der Regel vorhandenen drei Leiter Phase, Null und Erde müssen in dem Gehäuse der Steckdose drei Stromverteiler vorhanden sein, und wenn es sich beispielsweise um eine Dreifach-Steckdose handelt, bei der insgesamt neun Kontaktbuchsen um das Zentrum der Steckdose gleichmässig verteilt angeordnet sind, dann verlaufen bei den bekannten Steckdosen die Stromverteiler in mehreren Etagen im Abstand übereinander und sich kreuzend von dem jeweiligen Anschlussende zu den drei bei jedem Stromverteiler vorhandenen Kontaktbuchsen, wobei die Stromverteiler nach gesetzlicher Vorschrift einen gegenseitigen Abstand von 3 mm aufweisen müssen, weshalb die im Steckergehäuse freiliegenden Stromverteiler vielfach abgewinkelt und kompliziert ausgebildet sind, um sich im vorgeschriebenen Abstand von 3 mm kreuzen zu können. Die Kontaktbuchsen sind in der Regel an jeweils ein Armende des mehrarmigen Stromverteilers angenietet. Diese Ausgestaltung der bekannten Steckdosen dieser Art ist in der Teilfertigung wie auch in der Montage beim Zusammenbau der Steckdose kompliziert und entsprechend kostenaufwendig.

Zwangsläufig stellt sich daher die Aufgabe, eine Mehrfach-Steckdose wesentlich kostengünstiger herstellen zu können, wobei eine automatisierte Fertigung einen wesentlichen Anteil ausmachen soll und die Teilemontage entsprechend einfacher ist.

Aus der DE-A-36 11 224 ergibt sich ein Verfahren zur Herstellung eines Kombinationsteils aus Kunststoff mit in einem Einlegeteil angeordneten Stromverteilern zum Anschliessen an einer weiteren elektrischen Einheit, wobei aus einer ebenen Platine durch Stanzen drei Stromverteiler mit gegenseitigen Abständen voneinander in der Ebene hergestellt werden und wobei bei unveränderten Abständen in der Ebene die Stromverteiler mit Ausnahme aller Anschlussenden in einem Spritzwerkzeug mit Kunststoffmaterial umspritzt werden. Dieses Verfahren lässt sich grundsätzlich auch auf die Herstellung von Mehrfach-Steckdosen anwenden und entspricht somit dem eingangs defininierten Vorgehen.

Aufgabe der vorliegenden Erfindung war es nun, dieses Verfahren noch weiter zu optimieren und die Herstellung einer Mehrfachsteckdose nochmals zu verbessern.

Diese Aufgabe wird erfindungsgemäss durch das Vorgehen gemäss dem Kennzeichen von Anspruch 1 gelöst.

Um die Herstellung der Steckdose noch weiter zu vereinfachen, soll auch auf das bekannte Annieten der Kontaktbuchsen an die Stromverteiler verzichtet werden. Es sollen daher mit einer Feder versehene Kontaktbuchsen auf an den Stromverteilern abgebogene Lappen aufgesteckt werden, die durch einen Abschlussdeckel des Gehäuses festgehalten werden. Um bei einer Mehrfach-Steckdose für alle Kontaktverbindungen gleich ausgebildete Kontaktbuchsen mit Federn verwenden zu können und damit die Erd-Kontaktbuchsen gegenüber den anderen etwas vorstehen, wird daher bei dem erfindungsgemässen Verfahren zweckmässig der Erdstromverteiler mit den an diesem vorhandenen Lappen auf einem gegenüber den anderen Stromverteilern etwas höheren Niveau gehalten und dann mit Kunststoffmaterial umspritzt. Das Verfahren ermöglicht daher eine wesentlich vereinfachte Herstellung mit dem Ergebnis einer entsprechenden Kostenreduktion.

Das Verfahren zur Herstellung einer Mehrfach-Steckdose wird nachfolgend anhand der Zeichnungen näher beschrieben. Es zeigen:
Fig. 1 die in einem ersten Verfahrensschritt aus der Platine erzeugten Stromverteiler in Draufsicht;
Fig. 2 einen Querschnitt gemäss der Linie A-A in Fig. 1;
Fig. 3 die Stromverteiler in Draufsicht mit nach einem weiteren Verfahrensschritt umgebogenen Lappen;
Fig. 4 einen Querschnitt durch die Stromverteiler gemäss Fig. 2 gemäss der Linien B-B in Fig. 3;
Fig. 5 einen Querschnitt ähnlich Fig. 4 mit höher versetztem Erd-Stromverteiler;
Fig. 6 einen Querschnitt durch die zur Bildung des Steckdosen-Gehäuses mit Kunststoffmaterial umspritzten Stromverteiler gemäss der Linie C-C in Fig. 3;
Fig. 7 eine mit einer Klemmfeder versehene Kontaktbuchse in Ansicht;
Fig. 8 die Stromverteiler in Draufsicht gemäss Fig. 3 mit drei gestrichelt eingezeichneten Kontaktbuchsen.

Das Verfahren wird nachfolgend in Bezug auf die als Beispiel gewählte Herstellung einer Dreifach-Steckdose beschrieben. Es gilt allgemein für Mehrfach-Steckdosen. Aus einer aus elektrisch leitendem Material bestehenden Platine werden zunächst durch Stanzen drei Stromverteiler 1,2 und 3 hergestellt. Bei der Dreifach-Steckdose sind das der vom Platinenzentrun radial sich erstreckende Stromverteiler 1, ferner ein mittlerer Stromverteiler 2, der den Stromverteiler 1 bogenförmig mit unregelmässiger Kontur umschliesst, und schliesslich ein äusserer Stromverteiler 3, der den mittleren Stromverteiler 2 mit unregelmässiger Kontur bogenförmig umschliesst. Die Stromverteiler sind noch nicht restlos voneinander getrennt, sondern hängen jeweils über Materialbrücken 4 noch zusammen. Beim Stanzen werden an dem Stromverteiler 1 drei getrennte Lappen 5 ausgebildet, ebenso werden beim Stromverteiler 2 drei Lappen 6 und beim Stromverteiler 3 drei Lappen 7 ausgebildet. Ferner werden beim Stanzvorgang bei jedem Stromverteiler schmale Anschlussenden ausgebildet, und zwar beim Stromverteiler 1 zwei Anschlussenden 8, beim Stromverteiler zwei Anschlussenden 9 und beim Stromverteiler 3 vier Anschlussenden 10. Alle Anschlussenden befinden sich an der Peripherie und dienen zum Verbinden jeweils eines Stromverteilers mit einem der zur Steckdose führenden Leiter für Phase, Null und Erde. Ferner sind in jedem der Stromverteiler 1,2 und 3 eine Mehrzahl von Bohrungen 11 ausgebildet, die dazu dienen, die Stromverteiler mit Hilfe einer Maske zu halten, um mittels dieser die Stromverteiler in das Spritzwerkzeug einzubringen und zu entnehmen.

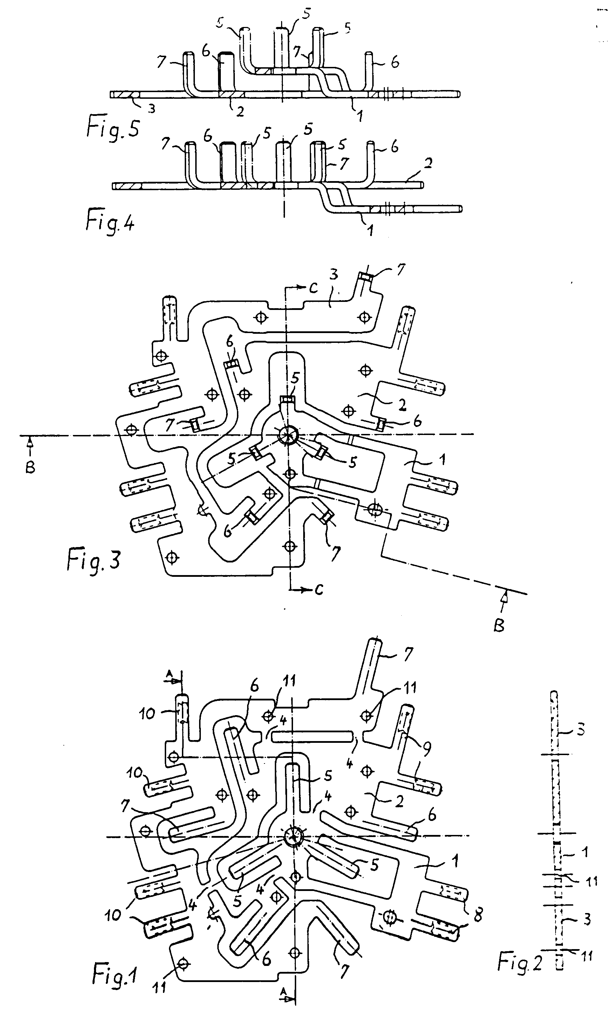

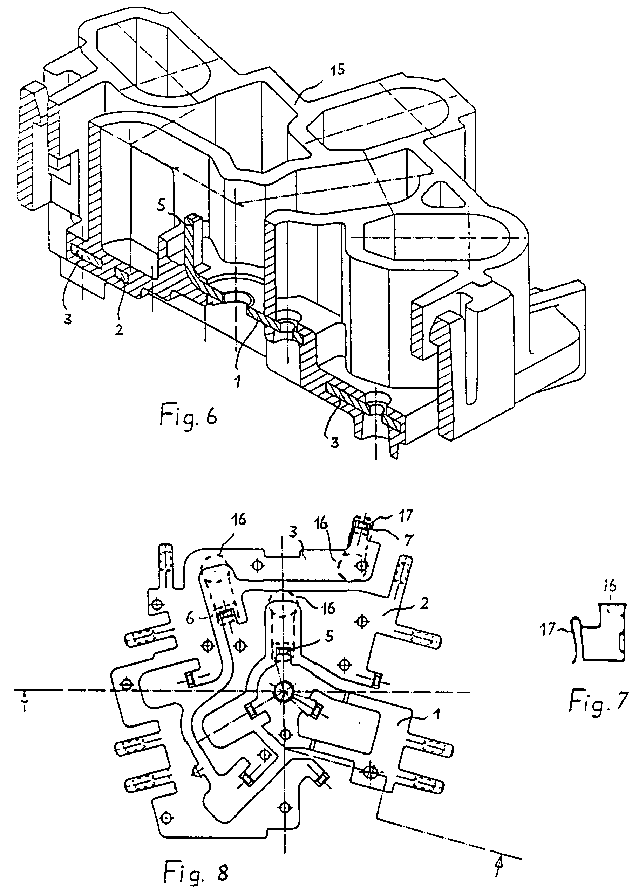

Beim ersten Herstellungsschritt liegen die ausgestanzten Stromverteiler gemäss Fig. 1 noch in einer Ebene, wie aus Fig. 2 hervorgeht. Beim nächsten Herstellungsschritt gemäss Fig. 3 werden alle vorhandenen Lappen 5,6 und 7 um 90° aus der Ebene nach oben gebogen und der Erd-Stromverteiler 1 wird in seinem von den Lappen 5 abgewandten und zum Anschlussende 8 führenden Teil zur entgegengesetzten Seite hin stufenförmig derart abgewinkelt, dass dieser Teil in einer zu den anderen Stromverteilern parallelen Ebene liegt, wie aus Fig. 4 hervorgeht. Ferner werden alle vorhandenen Materialbrücken 4 durchtrennt. Mit dem Abwinkeln des Erd-Stromverteilers 1 wird erreicht, dass in der wieder angehobenen Stellung des abgewinkelten Teils auf das Niveau der übrigen Stromverteiler die drei Lappen 5 des Erd-Stromverteilers nun gegenüber den Lappen der anderen Stromverteiler in der geforderten Weise vorstehen, und in dieser Stellung werden dann alle Stromverteiler 1,2 und 3 in das in der Zeichnung nicht dargestellte Spritzwerkzeug eingebracht, in welchem die Stromverteiler mit Kunststoffmaterial umspritzt werden, welches dann ein Gehäuseteil 15 der Mehrfach-Steckdose bildet, wie aus Fig. 6 hervorgeht. In Fig. 6 sind die Stromverteiler 1,2 und 3 gemäss der Linie C-C in Fig. 3 geschnitten, und man erkennt, dass der Stromverteiler 1 höher liegt als die beiden Stromverteiler 2 und 3. Auf die bei allen Stromverteilern 1,2 und 3 gleichlang ausgebildeten Lappen 5,6 und 7 können dann in Fig. 7 dargestellte Kontaktbuchsen 16, die mit einer Klemmfeder 17 versehen sind, aufgesteckt werden. Alle Kontaktbuchsen sind gleich ausgebildet und die auf den Lappen 5 des höher liegenden Stromverteilers 1 aufgesteckten Kontaktbuchsen stehen daher auch gegenüber den anderen vor.

In der mit Fig. 3 übereinstimmenden Fig. 8 sind drei Kontaktbuchsen 16 gestrichelt dargestellt. Sie gehören zu den Stromverteilern für Erde, Null und Phase und nehmen die drei Stifte eines Steckers auf. Aus konstruktiven Gründen befindet sich bei dem Stromverteiler 3 ein Lappen 7 an der Peripherie und deshalb ist die Kontaktbuchse 16 auf diesen Lappen anders herum aufzustecken als bei allen anderen Lappen. Dadurch liegen die Kontaktbuchsen dann in den Eckpunkten eines Dreiecks entsprechend der Anordnung der hineinzusteckenden Stifte eines Steckers. Alle Kontaktbuchsen 16 werden durch eine in der Zeichnung nicht dargestellten Gehäusedeckel festgehalten.

Mit dem vorstehend beschriebenen Verfahren ist die Herstellung einer Mehrfach-Steckdose wesentlich vereinfacht und im Innern derselben verlaufen die Stromverteiler ohne Ueberkreuzungen im geringen Abstand voneinander, was durch das Einbetten der Stromverteiler in das Kunststoffmaterial möglich ist.

## Patentansprüche

1. Verfahren zur Herstellung einer Mehrfach-Steckdose mit in einem Isoliermaterialgehäuse angeordneten Stromverteilern für Phase, Null und Erde zum Anschliessen an je einen Phase-, Null- und Erd-Leiter, bei welchem aus einer ebenen Platine durch Stanzen drei Stromverteiler (1,2,3) mit gegenseitigen Abständen voneinander in der Ebene hergestellt werden und dass bei unveränderten Abständen in der Ebene die Stromverteiler (1,2,3) mit Ausnahme aller Anschlussenden (5-10) in einem Spritzwerkzeug mit Kunststoffmaterial umspritzt werden, dadurch gekennzeichnet, dass aus der ebenen Platine drei in einer Ebene liegende, über Metallbrücken (4) noch zusammenhängende Stromverteiler (1,2,3) und an jedem dieser Stromverteiler eine der Anzahl der an die Mehrfach-Steckdose anschliessbaren Stecker entsprechende Anzahl von Lappen (5,6,7) zum Verbinden mit Kontaktbuchsen (16) hergestellt werden, dass anschliessend alle Lappen (5,6,7) aus der Platinenebene zur gleichen Seite hin rechtwinklig umgebogen werden, und der Erd-Stromverteiler (1) in seinem von den Lappen (5) abgewandten und zum Anschlussende (8) führenden Teil zur inbezug auf die Lappen (5) entgegengesetzten Seite hin stufenförmig derart abgewinkelt wird, dass der genannte Teil in einer zur Platinenebene parallelen Ebene liegt, dass die Materialbrücken (4) durchtrennt werden und dass der Erd-Stromverteiler (1) in einer gegenüber den beiden anderen Stromverteilern (2,3) niveauversetzten Stellung und mit seinem stufenförmig abgewinkelten Teil in der Ebene der anderen Stromverteiler (2,3) liegend, zusammen mit diesen in das Spritzwerkzeug eingelegt und zur Bildung eines endgültigen Gehäuseteils der Steckdose mit Kunstoffmaterial umspritzt wird.

2. Verfahren nach Anspruch 1, dadurch gekennzeichnet, dass alle aufrechtstehend angeordneten Lappen (5,6,7) der Stromverteiler (1,2,3), von denen die Lappen (5) des Erd-Stromverteilers (1) auf einem gegenüber den anderen Lappen (6,7) höher liegenden Niveau enden, mit gleich ausgebildeten, mit einer Feder (17) versehenen Kontaktbuchsen (16) bestückt werden.

3. Verfahren nach einem der vorhergehenden Ansprüche, dadurch gekennzeichnet, dass für einen Dreifach-Steckdose mit sternförmiger Anordnung der Kontaktbuchsen ein vom Platinenzentrum radial sich erstreckender Stromverteiler (1) und zwei weitere diesen bogenförmig mit unregelmässiger Kontur umschliessende Stromverteiler (2,3) durch Stanzen hergestellt werden und der radial sich erstreckende Stromverteiler (1) stufenförmig abgewinkelt wird.

4. Verfahren nach einem der vorhergehenden Ansprüche, dadurch gekennzeichnet, dass in jedem Stromverteiler (1,2,3) beim Stanzen eine Mehrzahl von Bohrungen (11) hergestellt werden, mittels welcher die Stromverteiler an einer Maske gehalten werden, mit deren Hilfe die Stromverteiler in das Spritzwerkzeug eingebracht werden.

## Claims

1. Process for manufacturing a multiple socket with a housing made of insulating material having arranged therein current distributors for phase, neutral and ground for being connected to a phase-, neutral- and ground-lead respectively, comprising manufacturing by punching from a planar plate in a plane three mutually spaced current distributors (1,2,3) and, with unchanged mutual spaces in the plane, surrounding by injection molding in a die said current distributors (1,2,3), with the exception of all connecting ends (5-10), with a plastic material, characterized by manufacturing from said planar plate three current distributors (1,2,3) in a same plane, still interconnected by metal bridges (4), and on each of these current distributors a number of tongues (5,6,7) corresponding to the number of plugs to be connected to said multiple socket, for being connected to contact sleeves (16), bending thereupon at right angles and to the same side all said tongues (5,6,7) out of the plane of said plate and bending the ground current distributor (1) at its section opposite the tongue (5) and leading to the connecting end (8) to the side opposite of said tongue (5) in stepped form such that said section will extend in a plane parallel to the plane of said plate, further by cutting through said metal bridges (4) and by inserting the ground current distributor (1) in a shifted level position compared with the other current distributors (2,3) and with
its stepwise bent section in the plane of the other current distributors (2,3) into said injection die, together with said other current distributors, and by surrounding these parts with plastic material to thereby form a final housing part of the socket.

2. Process according to claim 1, characterized in that all said upstanding tongues (5,6,7) of said current distributors, of which the tongues (5) of the ground current distributor (1) terminate on a higher level then the other tongues (6,7), are equipped with equally shaped spring (17) fitted contact sleeves (16).

3. Process according to any of the foregoing claims, characterized in that for a triple-socket with radially arranged contact sleeves a first radially extending current distributor (1) and two further current distributors, surrounding the first one in an irregular arc-shape, are produced by punching and by bending away in stepped form said radially extending current distributor (1).

4. Process according to any of the foregoing claims, characterized in that during the punching operation a number of holes (11) are provided in each of said current distributors (1,2,3) for holding the current distributors at a mask, the latter being used for inserting the current distributors into said injection die.

## Revendications

1. Procédé pour la fabrication d'une prise multiple avec des distributeurs de courant disposés dans un boîtier réalisé en un matériau isolant pour la phase, pour le zéro et pour la terre pour le raccordement à, respectivement, un conducteur de phase, de zéro et de terre, dans lequel on réalise à partir d'une platine plane par découpage trois distributeurs de courant (1, 2, 3) placés à une certaine distance les uns des autres dans le plan, et que, les distances n'étant pas modifiées, on pulvérise de la matière plastique dans le plan tout autour des distributeurs de courant (1, 2, 3), à l'exception de toutes les extrémités de raccordement (5-10), dans un outil de moulage ou de pulvérisation, caractérisé en ce qu'on réalise à partir de la platine plane trois distributeurs de courant (1, 2, 3) se trouvant dans un plan, encore relié par des ponts de matériau (4) et à chacun de ces distributeurs de courant un nombre de languettes (5, 6, 7) correspondant au nombre des prises pouvant être connectées à la prise multiple pour l'assemblage avec des douilles de contact (16), en ce qu'on replie ensuite toutes les languettes (5, 6, 7) du plan de platine vers le même côté suivant un angle droit, et qu'on coude le distributeur de courant pour la terre (1) dans sa partie éloignée des languettes (5) et menant à l'extrémité de raccordement (8) relativement au côté opposé aux languettes (5) en forme de gradin de telle sorte que ladite partie se situe dans un plan parallèle au plan de platine, que les ponts de matériau (4) sont séparés, et que le distributeur de courant pour la terre (1), se trouvant dans une position dont le niveau est décalé par rapport aux deux autres distributeurs de courant (2, 3) et avec sa partie coudée en forme de gradin dans le plan des autres distributeurs de courant (2, 3), est placé conjointement avec ceux-ci dans l'outil de moulage et, pour former une pièce de boîtier définitive de la prise, est entouré tout autour par pulvérisation d'une matière plastique.

2. Procédé selon la revendication 1, caractérisé en ce que toutes les languettes debout (5, 6, 7) des distributeurs de courant (1, 2, 3) dont les languettes (5) du distributeur de courant pour la terre (1) se terminent à un niveau situé plus haut par rapport aux autres languettes (6, 7) sont équipées de douilles de contact (16) réalisées de manière identique et pourvues d'un ressort (17).

3. Procédé selon l'une des revendications précédentes, caractérisé en ce qu'on réalise par découpage pour une prise triple dans laquelle les douilles de contact sont disposées en forme d'étoile, un distributeur de courant (1) s'étendant radialement du centre de la platine et deux autres distributeurs de courant (2, 3) entourant celui-ci en forme d'arc avec un contour irrégulier, et que le distributeur de courant (1) s'étendant radialement est coudé en forme de

4. Procédé selon l'une des revendications précédentes, caractérisé en ce qu'on réalise dans chaque distributeur de courant (1, 2, 3) lors du découpage une pluralité de perçages (11) au moyen desquels les distributeurs de courant sont maintenus à un moule à l'aide duquel les distributeurs de courant sont introduits dans l'outil de moulage.
